# EUROPÄISCHE PATENTSCHRIFT

(11) **EP 4 061 505 B1**
(45) Veröffentlichungstag und Bekanntmachung des Hinweises auf die Patenterteilung: **27.03.2024**
(21) Anmeldenummer: 20808059.8
(22) Anmeldetag: 16.11.2020
(51) Int. Cl.: B01D 46/00, B01D 46/24

(54) **LUFTFILTER MIT EINEM PRIMÄRLUFTAUSLASS UND EINEM SEKUNDÄRLUFTAUSLASS**
AIR FILTER COMPRISING A PRIMARY AIR OUTLET AND A SECONDARY AIR OUTLET
FILTRE À AIR COMPRENANT UNE SORTIE D'AIR PRIMAIRE ET UNE SORTIE D'AIR SECONDAIRE

(30) Priorität: 18.11.2019 DE 102019131033
(43) Veröffentlichungstag der Anmeldung: 28.09.2022
(73) Patentinhaber: MANN+HUMMEL GmbH, 71636 Ludwigsburg (DE)
(72) Erfinder: KROHLOW, Matthias, 71083 Herrenberg (DE); SCHMID, Daniel, 74343 Sachsenheim (DE); SONNTAG, Martin, 71691 Freiberg (DE); PFANNKUCH, Steffen, 71636 Ludwigsburg (DE); SCHMID, Martin, 94419 Reisbach (DE); WITTMERS, Christoph, 74321 Bietigheim-Bissingen (DE); HASENFRATZ, Robert, 74523 Schwäbisch Hall (DE)
(74) Vertreter: Mann + Hummel Intellectual Property
(86) Internationale Anmeldenummer: PCT/EP2020/082181
(87) Internationale Veröffentlichungsnummer: WO 2021/099237

(56) Entgegenhaltungen:
- WO-A1-2012/172017
- WO-A1-2013/129999
- DE-U1-202005 003 046
- US-A1- 2018 369 732

## Beschreibung

### Technisches Gebiet

Die Erfindung betrifft einen Luftfilter mit einem Rohlufteinlass, einem Primärluftauslass und einem Sekundärluftauslass.

### Stand der Technik

Luftfilter mit einem Primärluftauslass und einem Sekundärluftauslass für gefilterte Luft werden beispielsweise bei Verbrennungsmotoren von Kraftfahrzeugen eingesetzt. Der Primärluftauslass dient typischerweise der Bereitstellung von (gefilterter) Reinluft zur Verwendung bei der Verbrennung in dem Verbrennungsmotor. Der Sekundärluftauslass kann beispielsweise zur Bereitstellung von (gefilterter) Reinluft zur Verwendung in einem Abgasstrang des Verbrennungsmotors dienen, insbesondere zur Abgasnachbehandlung.

Die EP 1 451 464 B1 beschreibt einen Ansaugluftfilter für eine Brennkraftmaschine, mit einem Filtergehäuse, das einen Rohlufteinlass und einen Reinluftauslass sowie einen reinseitigen Sekundärluftauslass aufweist. Der Ansaugluftfilter weist einen in dem Filtergehäuse angeordneten, radial von außen nach innen durchströmten Ringfiltereinsatz auf. Der Ringfiltereinsatz weist an einem axialen Ende eine erste Endscheibe auf, die mindestens eine Öffnung aufweist, durch die der Reinluftauslass mit einem Inneren des Ringfiltereinsatzes kommuniziert. Der Ringfiltereinsatz weist an einem von der ersten Endscheibe abgewandten axialen Ende eine zweite Endscheibe auf, die mindestens eine Öffnung aufweist, durch die der Sekundärluftauslass mit dem Inneren des Ringfiltereinsatzes kommuniziert, wobei an der zweiten Endscheibe ein Anschlussstutzen ausgebildet ist.

Ein ähnlicher Luftfilter ist auch aus der WO 2017/103048 A1 bekannt.

Die WO 2012/172017 A1 beschreibt ein Filterelement mit einem ringförmigen Filterkörper, der einen Innenraum in Umfangsrichtung umschließt. In einer Endscheibe des Filterelements ist ein Hauptanschluss, der mit dem Innenraum fluidisch verbunden ist, ausgebildet. Der Filterkörper weist einen Kanal auf, der sich axial erstreckt und der radial offen ist, wobei ein Nebenabschluss, der mit dem Innenraum fluidisch verbunden ist, im Bereich des Kanals angeordnet ist.

Ferner ist aus WO 2013/129999 A1 ein Filtergehäuse für einen Luftfilter bekannt, das einen zentralen Primärluftauslass sowie einen radial außerhalb des Primärluftauslasses vorliegenden Sekundärluftauslass umfasst.

Es ist Aufgabe der Erfindung, einen Luftfilter mit einem Primärluftauslass und einem Sekundärluftauslass anzugeben, bei dem eine Durchströmung des Primärluftauslasses von einer Durchströmung des Sekundärluftauslasses nicht wesentlich beeinflusst wird, und der vorzugsweise anstelle eines vorhandenen Luftfilters ohne einen Sekundärluftauslass einsetzbar ist.

### Offenbarung der Erfindung

Die Aufgabe wird durch einen Luftfilter mit den in Anspruch 1 angegebenen Merkmalen gelöst. Bevorzugte Ausführungsformen sind in den Unteransprüchen und der Beschreibung angegeben.

Erfindungsgemäß ist ein Luftfilter vorgesehen. Der Luftfilter kann insbesondere zur Versorgung eines Verbrennungsmotors mit gefilterter Verbrennungsluft dienen. Der Luftfilter weist ein Filtergehäuse mit einem Rohlufteinlass auf. Durch den Rohlufteinlass kann im Betrieb des Luftfilters zu filternde Luft in das Filtergehäuse strömen. Der Luftfilter weist ferner ein Filterelement auf. Das Filterelement ist in dem Filtergehäuse angeordnet. Ein Filtermedium des Filterelements umgibt eine Längsachse des Filterelements ringförmig. Richtungsangaben, wie beispielsweise radial oder axial, beziehen sich für die Beschreibung der vorliegenden Erfindung auf die Längsachse des Filterelements. Das Filterelement bzw. dessen Filtermedium trennt eine Rohseite in dem Filtergehäuse von einer Reinseite innerhalb des Filterelements. Das Filterelement ist mithin von radial außen nach radial innen durchströmbar. Die Rohseite ist mit anderen Worten zwischen dem Filterelement und dem Filtergehäuse ausgebildet. Die Rohseite und die Reinseite können auch als ein Rohraum bzw. Reinraum bezeichnet werden.

Das Filterelement weist eine erste Endscheibe mit einem Reinluftdurchlass auf. Gefilterte Luft kann durch den Reinluftdurchlass aus dem Inneren des Filterelements, d. h. von der Reinseite, herausströmen bzw. abgezogen werden. Das Filterelement weist typischerweise eine zweite Endscheibe auf. Die Endscheiben sind an gegenüberliegenden axialen Enden des Filterelements angeordnet. Die zweite Endscheibe des Filterelements ist grundsätzlich geschlossen ausgebildet. Die erste und ggf. die zweite Endscheibe sind typischerweise stoffschlüssig mit dem Filtermedium verbunden, insbesondere kann das Filtermedium in das Material der Endscheiben eingebettet sein bzw. mit den Endscheiben verklebt sein.

An dem Filtergehäuse ist ein Primärluftauslass ausgebildet. Der Primärluftauslass kommuniziert mit der Reinseite des Filterelements. Mit anderen Worten ist der Primärluftauslass fluidisch mit der Reinseite verbunden. Hierzu dient der Reinluftdurchlass in der ersten Endscheibe. Typischerweise strömt im Betrieb des Luftfilters ein wesentlicher Teil der gefilterten Reinluft durch den Primärluftauslass. Der Primärluftauslass kann koaxial zur Längsachse des Filterelements am Filtergehäuse ausgebildet sein.

An dem Filtergehäuse ist ferner ein Sekundärluftauslass ausgebildet. Im Betrieb des Luftfilters strömt typischerweise ein im Vergleich zum durch den Primärluftauslass strömenden Teil der gefilterten Reinluft kleinerer Teil der Reinluft durch den Sekundärluftauslass. Erfindungsgemäß kommuniziert der Sekundärluftauslass über einen Kanal mit der Reinseite. Mit anderen Worten ist eine fluidische Verbindung der Reinseite mit dem Sekundärluftauslass mittels des Kanals gebildet. Eine fluidische Verbindung des Kanals mit der Reinseite verläuft typischerweise durch den Reinluftdurchlass der ersten Endscheibe. Der Kanal umgibt den Primärluftauslass ringförmig. In radialer Richtung ist der Kanal durch eine umlaufende Innenwand und eine umlaufende Außenwand begrenzt. Die Innenwand begrenzt den Kanal nach radial innen. Die Außenwand begrenzt den Kanal nach radial außen. Der Kanal erstreckt sich typischerweise in axialer Richtung angrenzend an die erste Endscheibe. In axialer Richtung von der ersten Endscheibe weg kann der Kanal durch eine Deckwand zumindest abschnittsweise begrenzt sein. Der Sekundärluftauslass ist grundsätzlich exzentrisch zur Längsachse am Filtergehäuse angeordnet. Dies erlaubt eine platzsparende Anordnung des Primärluftauslasses und des Sekundärluftauslasses nebeneinander.

Die erste Endscheibe und die Außenwand des Kanals sind dichtend miteinander verbunden. Durch die (luft-)dichte Verbindung der ersten Endscheibe und der Außenwand des Kanals wird ein Übertritt von ungefilterter Rohluft von der Rohseite auf die Reinseite in den Bereich des Kanals verhindert.

Da der Kanal den Primärluftauslass ringförmig umgibt, beeinflusst eine Strömung von Reinluft in den Kanal die Durchströmung des Primärluftauslasses nicht oder nur unwesentlich. Insbesondere kann mithilfe des ringförmigen Kanals erreicht werden, dass ein Geschwindigkeitsprofil der Luftströmung im Primärluftauslass qualitativ nicht oder zumindest nicht nennenswert dadurch beeinflusst wird, ob Reinluft durch den Sekundärluftauslass strömt oder nicht bzw. wie groß ein Volumenstrom bzw. Massenstrom von Reinluft durch den Sekundärluftauslass ist.

Zwischen der ersten Endscheibe und der Innenwand des Kanals kann ein Ringspalt ausgebildet sein. Durch diesen Ringspalt kann eine gleichmäßige Einströmung eines Teils der gefilterten Reinluft in den Kanal erreicht werden.

Da der Sekundärluftauslass über den ringförmigen Kanal mit der Reinseite kommuniziert, kann der Primärluftauslass unproblematisch auf eine bestehende Anschlussstruktur einer mit Reinluft zu vorsorgenden Einrichtung, beispielsweise eines Verbrennungsmotors, angepasst werden. Mit dem erfindungsgemäßen Luftfilter ist es daher möglich, eine zusätzliche Sekundärluftversorgung mit gefilterter Reinluft bereitzustellen, ohne an der (an den Primärluftauslass anzuschließenden) Anschlussstruktur zur Hauptluftversorgung der Einrichtung Änderungen vorzunehmen.

An der ersten Endscheibe ist ein sich axial erstreckender Vorsprung ausgebildet, der den Reinluftdurchlass ringförmig umgibt und der dichtend mit der Außenwand des Kanals verbunden ist. Auf diese Weise kann die dichte Verbindung der ersten Endscheibe mit der Außenwand auf einfache Weise eingerichtet werden. Der Vorsprung und die Außenwand überlappen sich in axialer Richtung. Dies kann dazu beitragen, die Montage des Luftfilters zu vereinfachen, insbesondere im Hinblick auf das Einrichten der dichten Verbindung zwischen der Außenwand und der ersten Endscheibe. Der Vorsprung kann radial außerhalb der Außenwand des Kanals angeordnet sein.

An dem Vorsprung kann ein insbesondere einstückig mit dem Vorsprung ausgeformtes Dichtelement, insbesondere eine Dichtlippe, ausgebildet sein, die insbesondere auf einer radial inneren Seite des Vorsprungs angeordnet ist. Das Dichtelement wirkt radial. Alternativ kann zwischen dem Vorsprung und der Außenwand ein separates Dichtelement angeordnet sein, bei dem es sich beispielsweise um einen oder mehrere O-Ring(e) handeln kann. Das (separate) Dichtelement kann an dem Vorsprung gehalten sein. Mithin wird beim Austauschen des Filterelements das Dichtelement mit ausgetauscht. Damit kann gewährleistet werden, dass beim Einsetzen eines neuen Filterelements in das Filtergehäuse die Verbindung der ersten Endscheibe mit der Außenwand des Kanals wieder die geforderten Dichtigkeitseigenschaften aufweist. Vorzugsweise ist das Dichtelement an den Vorsprung angespritzt. Die Endscheibe und das Dichtelement sind mithin als ein Zweikomponentenbauteil ausgebildet. Dies ist im Hinblick auf die Herstellung und die Handhabung des Filterelements sowie die zuverlässige Abdichtung von Vorteil. Das Dichtelement kann aus einem Elastomer oder Polyurethanschaumbestehen. Alternativ kann das Dichtelement auch an einer zu dem Vorsprung weisenden Seite der Außenwand ausgebildet sein, wobei der Vorsprung dichtelementfrei ausgebildet ist. Vorteilhaft ist es jedoch, wenn das Dichtelement an dem Vorsprung des Filterelements ausgebildet ist, da hierdurch das Dichtelement bei jedem Filterelementwechsel mit ausgetauscht wird.

Besonders bevorzugt kann der Vorsprung radial außerhalb des Reinluftdurchlasses des Filterelements vorliegen und ein radialer Abstand des Vorsprungs zu einer radial äußeren Umlaufkante der ersten Endscheibe kleiner sein als ein radialer Abstand des Vorsprungs zu einer radial inneren Umlaufkante des Reinluftdurchlasses. Hierdurch wird ermöglicht, dass der Kanal eine größere Radialerstreckung aufweist, was dazu beiträgt, für den Sekundärluftauslass einen hinreichenden Strömungsquerschnitt zur Verfügung zu stellen. Ferner wird hierdurch sichergestellt, dass die "Hauptströmung" aus dem Reinluftdurchlass des Filterelements möglichst wenig gestört wird, was ansonsten negative Auswirkungen auf ein Strömungsprofil haben kann, was unter Umständen zu Fehlmessungen einer fluidisch nachgeschalteten Strömungsmesseinrichtung (MAF) führen kann.

Das Filtergehäuse kann ein Adapterteil aufweist, an welchem die Innenwand des Kanals ausgebildet ist. Mittels des Adapterteils kann die Herstellbarkeit komplexer Strukturen, insbesondere im Bereich des Kanals, am Filtergehäuse verbessert werden. Das Adapterteil begrenzt den Kanal zumindest abschnittsweise in axialer Richtung. Hierzu kann eine Deckwand an dem Adapterteil ausgebildet sein. Die Deckwand des Adapterteils, die den Kanal in axialer Richtung begrenzt, kann für den Sekundärluftauslass durchbrochen sein. Im Übrigen ist die Deckwand typischerweise durchgängig geschlossen ausgebildet.

Auch die Außenwand des Kanals kann an dem Adapterteil ausgebildet sein. Die erste Endscheibe kann dann unmittelbar dichtend an dem Adapterteil gehalten sein. Dies erlaubt es, das Filtergehäuse und das Filterelement im Übrigen mit größeren Toleranzen herzustellen. Besonders bevorzugt ragt die Außenwand axial weiter hervor als die Innenwand.

Das Adapterteil kann mit einem weiteren Gehäuseteil des Filtergehäuses verrastet sein. Dies erlaubt eine besonders einfache Montage. Alternativ kann das Adapterteil mit einem weiteren Gehäuseteil des Filtergehäuses verschweißt sein. Dies ist vorteilhaft, sofern eine dichte Verbindung zwischen dem Adapterteil und dem weiteren Gehäuseteil eingerichtet werden soll.

Das Adapterteil kann einen den Sekundärluftauslass bildenden Stutzen aufweisen. Dies vereinfacht es, eine mit gefilterter Reinluft durch den Sekundärauslass zu versorgende weitere Einrichtung, beispielsweise eine Abgasnachbehandlungseinrichtung, an den Luftfilter anzuschließen. Der Stutzen erstreckt sich vorzugsweise schräg von der Längsachse weg. Dies ist für die Zugänglichkeit des Stutzens beim Anschließen der weiteren Einrichtung vorteilhaft.

Vorzugsweise weist der Luftfilter einen Luftmassenmesser auf, der mit dem Primärluftauslass verbunden ist. Der Luftmassenmesser ermöglicht die Messung des durch den Primärluftauslass strömenden Massenstroms oder in Sonderfällen Volumenstroms von gefilterter Reinluft. Insbesondere kann der Luftmassenmesser unmittelbar anschließend an den Primärluftauslass angeordnet sein. Dies erlaubt einen in axialer Richtung besonders kompakten Bau. Da durch die erfindungsgemäße Versorgung des Sekundärluftauslasses mit gefilterter Reinluft über den ringförmigen Kanal die Durchströmung des Primärluftauslasses nicht (merklich) beeinflusst wird, kann der Luftmassenmesser besonders dicht am Primärluftauslass angeordnet sein, ohne dass dessen Messergebnisse beeinträchtigt werden. Der Luftmassenmesser kann als ein Heißfilm-Luftmassenmesser ausgebildet sein.

Wenn das Filtergehäuse ein Adapterteil aufweist, kann ein Gehäuseelement des Luftmassenmessers einstückig mit dem Adapterteil ausgebildet sein. Dies kann die Montage des Luftfilters vereinfachen.

Vorzugsweise begrenzt die Innenwand des Kanals den Primärluftauslass zu dem Kanal hin. Die Innenwand des Kanals bildet mithin eine radial äußere Begrenzung des Primärluftauslasses. Auf diese Weise kann ein in radialer Richtung besonders kompakter Bau des Filtergehäuses im Bereich der beiden Luftauslässe erreicht werden. Ferner kann durch diese Bauweise Material eingespart werden.

Wenn die Innenwand den Primärluftauslass zu dem Kanal hin begrenzt, kann ein Gehäuseelement des Luftmassenmessers dichtend mit der Innenwand des Kanals verbunden sein. Das Gehäuseelement und die Innenwand sind mithin an separaten Bauteilen ausgebildet. Dies erlaubt die Verwendung eines bereits vorhandenen Luftmassenmessers bei dem Luftfilter. Wenn die Innenwand an einem Adapterteil ausgebildet ist, kann das Filtergehäuse besonders einfach auf das Gehäuseelement des Luftmassenmessers angepasst werden. An der Innenwand kann eine einstückig mit der Innenwand ausgeformte Dichtlippe ausgebildet sein. Alternativ kann zwischen der Innenwand und dem Gehäuseelement ein (separates) weiteres Dichtelement angeordnet sein. Das weitere Dichtelement kann an der Innenwand des Kanals gehalten sein. Das Gehäuseteil mit der Innenwand (insbesondere das Adapterteil) und das weitere Dichtelement sind mithin als ein Zweikomponentenbauteil ausgebildet. Dies ist im Hinblick auf die Handhabung des Filtergehäuses und die zuverlässige Abdichtung von Vorteil. Das weitere Dichtelement kann aus einem Elastomer oder Polyurethanschaumbestehen.

Die Innenwand des Kanals kann in radialer Richtung innerhalb des Reinluftdurchlasses der ersten Endscheibe angeordnet sein. Alternativ oder zusätzlich kann die Innenwand des Kanals in axialer Richtung von der ersten Endscheibe beanstandet angeordnet sein. Durch diese Gestaltungsvarianten kann ein Ringspalt zwischen der ersten Endscheibe und der Innenwand eingerichtet sein. Durch den Ringspalt ist der Kanal zu der Reinseite des Filterelements hin eröffnet. Daher kann gefilterte Reinluft in den Kanal einströmen. Die Anordnung und Größe des Ringspalts können für eine möglichst geringe Beeinflussung der Durchströmung des Primärluftauslasses gewählt werden.

Ferner kann das Filterelement eine hohlzylindrische Form aufweisen. Vorzugsweise ist das Filtermedium des Filterelements sternförmig gefaltet. Dadurch kann eine wirksame Filterfläche des Filtermediums vergrößert werden, ohne die Außenabmessungen des Luftfilters zu erhöhen. Das Filtermedium kann aus Cellulosefasern, synthetischen Fasern, Glasfasern oder Mischmedien aus den genannten Fasertypen bestehen

### Kurze Beschreibung der Zeichnungen

Weitere Merkmale und Vorteile der Erfindung ergeben sich aus der nachfolgenden detaillierten Beschreibung eines Ausführungsbeispiels der Erfindung, aus den Patentansprüchen sowie anhand der Figuren der Zeichnung, die erfindungsgemäße Einzelheiten zeigen. Die zuvor genannten und noch weiter ausgeführten Merkmale können je einzeln für sich oder zu mehreren in beliebigen, zweckmäßigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können.

In der Zeichnung zeigen:
- Fig. 1: einen erfindungsgemäßen Luftfilter mit einem ringförmigen Filterelement, das eine durchbrochene erste Endscheibe und eine geschlossene zweite Endscheibe aufweist, und mit einem Filtergehäuse, dass ein erstes und ein zweites Gehäuseteil sowie ein Adapterteil aufweist, wobei an dem Adapterteil ein zentraler Primärluftauslass sowie ein exzentrisch angeordneter Sekundärluftauslass ausgebildet sind, wobei ein zu dem Sekundärluftauslass führender Kanal den Primärluftauslass ringförmig umgibt, in einer schematischen Schnittansicht;
- Fig. 2: den Luftfilter von Figur 1 in einer schematischen Explosionsdarstellung;
- Fig. 3: ein Detail aus Figur 1 im Bereich der Verbindung des Adapterteils mit dem ersten Gehäuseteil und mit der ersten Endscheibe des Filterelements;
- Fig. 4: den Luftfilter von Figur 1 in einer schematischen Ansicht mit Blick entlang einer Längsachse des Filterelements.

### Ausführungsform der Erfindung

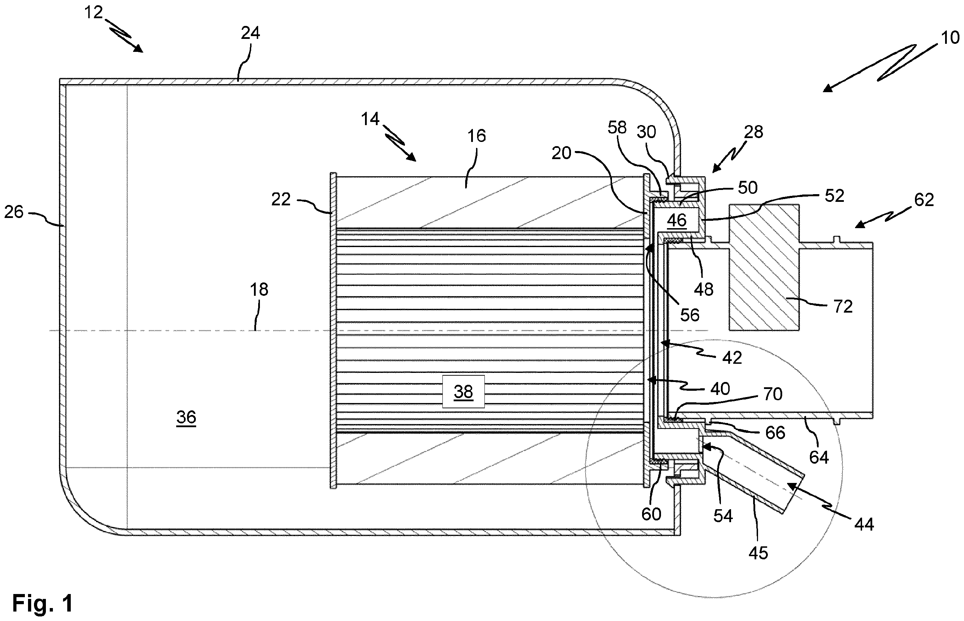

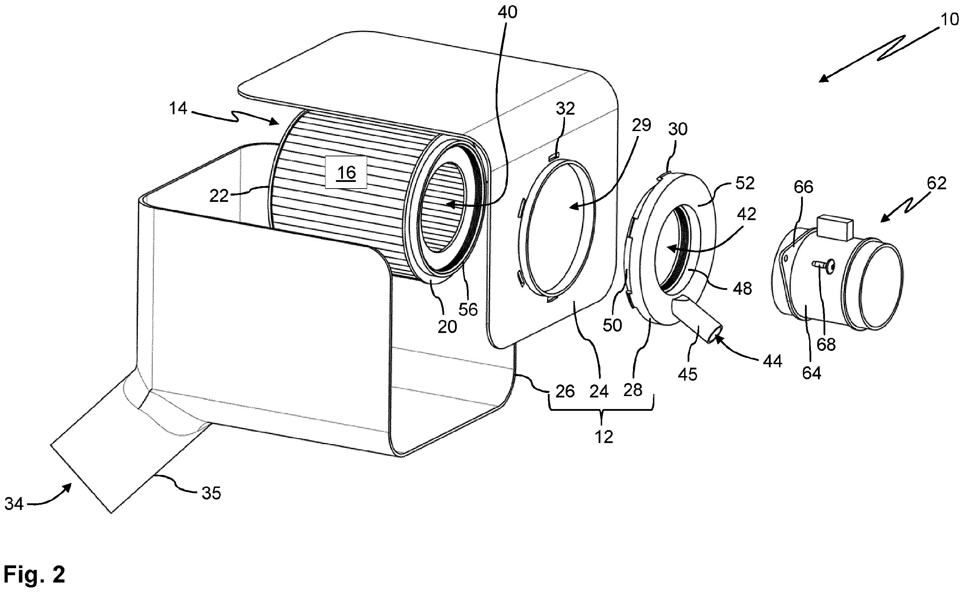

**Figur 1** zeigt einen Luftfilter **10** in einer Schnittansicht. In **Figur 2** ist der Luftfilter 10 in einer Explosionsdarstellung gezeigt.

Der Luftfilter 10 weist ein Filtergehäuse **12** auf. In dem Filtergehäuse 12 ist ein Filterelement **14** angeordnet. Das Filterelement 14 weist ein Filtermedium **16** auf. Das Filtermedium 16 umgibt eine Längsachse **18** des Filterelements 14 ringförmig. Das Filterelement 14 ist von radial außen nach radial innen durchströmbar. Das Filtermedium 16 ist hier sternförmig gefaltet ausgebildet. An axialen Enden des Filterelements 14 sind eine erste Endscheibe **20** und eine zweite Endscheibe **22** mit dem Filtermedium 16 verbunden.

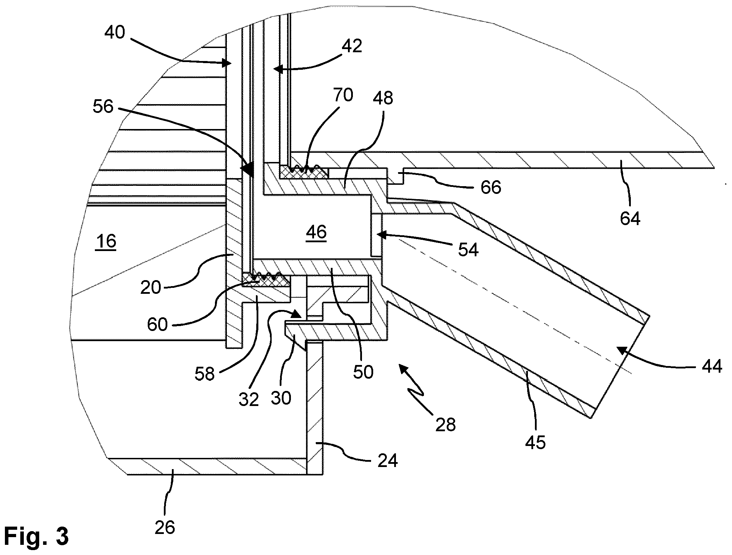

Das Filtergehäuse 12 weist hier ein erstes Gehäuseteil **24,** ein zweites Gehäuseteil **26,** und ein Adapterteil **28** auf. Für einen Betrieb des Luftfilters 10 sind das erste Gehäuseteil 24 und das zweite Gehäuseteil 26 aneinander befestigt, vergleiche Figur 1, beispielsweise miteinander verrastet. Zum Austauschen des Filterelements 14 können die beiden Gehäuseteil 24, 26 voneinander gelöst werden. Das Adapterteil 28 kann mit einem der Gehäuseteile, hier dem ersten Gehäuseteil 24, verrastet sein. Das Adapterteil 28 weist hierzu Rasthaken **30** auf die in Rastausnehmungen **32** des ersten Gehäuseteils 24 eingreifen, vergleiche auch **Figur 3****.** Das Adapterteil 28 kann in eine Auslassausnehmung **29** (vergleiche Figur 2) des ersten Gehäuseteils 14 eingreifen.

Das Filtergehäuse 12 weist einen Rohlufteinlass **34** auf. Der Rohlufteinlass 34 ist hier als ein Stutzen **35** an dem zweiten Gehäuseteil 26 ausgebildet, siehe Figur 2. Innerhalb des Filtergehäuses 12 trennt das Filterelement 14 eine Rohseite **36** von einer Reinseite **38.** Die Rohseite 36 ist der Raum außerhalb des Filterelements 14. Die Reinseite 38 ist der Raum innerhalb des Filtermediums 16 und zwischen den Endscheiben 20, 22. Die zweite Endscheibe 22 ist zur Trennung der Rohseite 36 von der Reinseite 38 geschlossen ausgebildet. Die Rohseite 36 kann auch als ein Rohraum und die Reinseite 38 als ein Reinraum bezeichnet werden. Im Betrieb des Luftfilters 10 strömt zu filternde Rohluft durch den Rohlufteinlass 34 auf die Rohseite 36. Von der Rohseite 36 strömt die Luft durch das Filtermedium 16 und gelangt als gefilterte Reinluft auf die Reinseite 38.

Die erste Endscheibe 20 weist einen Reinluftdurchlass **40** auf. Über den Reinluftdurchlass 40 kommuniziert die Reinseite 38 mit einem Primärluftauslass **42** und einem Sekundärluftauslass **44.** Sowohl der Primärluftauslass 42 als auch der Sekundärluftauslass 44 können an dem Adapterteil 28 ausgebildet sein. Der Primärluftauslass 42 ist hier in Form einer zentralen Öffnung ausgeführt. Der Primärluftauslass 42 kann koaxial zur Längsachse 18 angeordnet sein. Der Sekundärluftauslass 44 kann durch einen Stutzen **45** gebildet sein. Der Stutzen 45 des Sekundärluftauslasses 44 kann sich schräg von der Längsachse 18 weg erstrecken.

Zur fluidischen Verbindung des Sekundärluftauslasses 44 mit der Reinseite 38 ist ein Kanal **46** vorgesehen. Mit anderen Worten kommuniziert der Sekundärluftauslass 44 durch den Kanal 46 mit der Reinseite 38. Der Kanal 46 umgibt den Primärluftauslass 42 ringförmig. In radialer Richtung ist der Kanal 46 durch eine (radial innenliegende Innenwand **48** und eine (radial außen liegende) Außenwand **50** begrenzt. Die Innenwand 48 kann den Kanal 46 und den Primärluftauslass 42 unmittelbar voneinander trennen. Mit anderen Worten kann die Innenwand 48 den Primärluftauslass 42 zu dem Kanal hin 46 begrenzen. In axialer Richtung von dem Filterelement 14 weg ist der Kanal 46 durch eine Deckwand **52** begrenzt. Die Deckwand 52 weist einen Durchbruch **54** für den Sekundärluftauslass 44 auf. Im Übrigen ist die Deckwand 52 geschlossen ausgebildet. Zu der ersten Endscheibe 20 hin kann der Kanal 46 offen sein. Die Innenwand 48 des Kanals 46 ist hier in axialer Richtung von der ersten Endscheibe 20 beanstandet angeordnet. Durch diesen Abstand ist ein Ringspalt **56** ausgebildet, welcher den Kanal 46 zu der Reinseite 38 hin eröffnet. Aus dem Sekundärluftauslass 44 zu entnehmende Reinluft strömt im Betrieb des Luftfilters 10 von der Reinseite 38 zunächst durch den Reinluftdurchlass 40, dann durch den Ringspalt 56 in den Kanal 46 und schließlich durch den Durchbruch 54 in den Stutzen 45.

Die erste Endscheibe 20 ist dichtend mit der Außenwand 50 des Kanals 46 verbunden, siehe insbesondere Figuren 1 und 3. Dies verhindert einen Übertritt von ungefilterter Rohluft von der Rohseite 36 an dem Filtermedium 16 vorbei auf die Reinseite 38. Die dichte Verbindung der ersten Endscheibe 20 mit der Außenwand 50 kann - muss jedoch nicht - unmittelbar zwischen der ersten Endscheibe und der Außenwand eingerichtet sein. Die erste Endscheibe 20 weist hier einen Vorsprung **58** auf. Der Vorsprung 58 ragt in axialer Richtung von dem Filtermedium 16 weg von der ersten Endscheibe 20 ab. Der Vorsprung 58 und die Außenwand 50 des Kanals 46 können sich im montierten Zustand des Luftfilters 10 in axialer Richtung überlappen. Zur Abdichtung der ersten Endscheibe 20 gegenüber der Außenwand 50 kann ein Dichtelement **60** vorgesehen sein. Das Dichtelement 60 kann in radialer Richtung zwischen der Außenwand 50 und dem Vorsprung 58 angeordnet sein. Hier ist das Dichtelement 60 an die erste Endscheibe 20 angespritzt (d. h. in einem Spritzgussverfahren an die erste Endscheibe 20 angeformt). Die erste Endscheibe 20 und das Dichtelement 60 bilden daher ein Zweikomponentenbauteil. Bei der gezeigten Ausführungsform des Luftfilters 10 ist das Filterelement 14 über den Vorsprung 58 der ersten Endscheibe 20 mit dem Filtergehäuse 12, hier mit der Außenwand 50 des Kanals 46, verbunden. Längentoleranzen des Filterelements 14 in axialer Richtung sind daher für die funktionsgemäß dichte Anbindung des Filterelements 14 an das Filtergehäuse 12 unerheblich. Das Filterelement 14 kann in nicht dargestellter Weise in axialer Richtung fixiert sein, insbesondere federnd fixiert sein, um zu vermeiden, dass es sich während des Betriebs löst. Hierzu kann beispielsweise zwischen der zweiten Endscheibe 22 und einem dieser Endscheibe 22 zuweisenden Gehäuseabschnitt des Filtergehäuses 12 ein Federelement (nicht dargestellt) angeordnet sein. Alternativ kann das Filterelement 14 formschlüssig relativ zu der Außenwand 50 des Kanals 46 fixiert sein, insbesondere an der Außenwand 50.

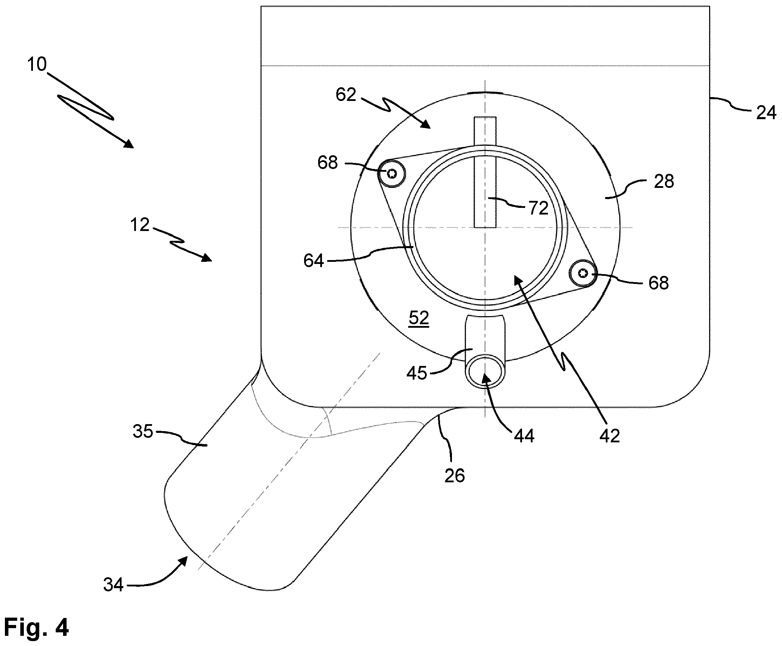

Der Luftfilter 10 kann einen Luftmassenmesser **62** aufweisen. Der Luftmassenmesser 62 ist mit dem Primärluftauslass 42 fluidisch verbunden. Der Luftmassenmesser 62 dient zur Messung eines Massenstroms von gefilterter Reinluft durch den Primärluftauslass 42. Ein Gehäuseelement **64** des Luftmassenmessers 62 kann dichtend mit der Innenwand 48 des Kanals 46, welche den Primärluftauslass 42 hier nach radial außen begrenzt, verbunden sein. Hier ist das Gehäuseelement 64 in das Adapterteil 28 eingesteckt. Zur Begrenzung der Einstecktiefe kann ein Anschlag **66** an dem Gehäuseelement 64 ausgebildet sein. Mittels zweier den Anschlag 66 durchgreifender Schrauben **68** kann der Luftmassenmesser 62 an dem Filtergehäuse 12, insbesondere dem Adapterteil 28, fixiert sein, vergleiche auch Figur 4. Die Schrauben 68 greifen hier in die Deckwand 52 des Adapterteils 28 ein.

Die Innenwand 48 und das Gehäuseelement 64 können einander in axialer Richtung überlappen. Zwischen der Innenwand 48 und dem Gehäuseelement 64 kann ein weiteres Dichtelement **70** angeordnet sein. Das weitere Dichtelement 70 kann an das Adapterteil 28 angespritzt sein. Das Adapterteil 28 und das weitere Dichtelement 70 bilden mithin ein Zweikomponentenbauteil.

Der Luftmassenmesser 62 kann als ein Heißfilm-Luftmassenmesser mit einem (stark abstrahiert dargestellten) Hitzdrahtanemometer **72** ausgebildet sein. Insbesondere in den Figuren 1 und 4 ist zu erkennen, dass sich das Hitzdrahtanemometer 72 in das Gehäuseelement 64 des Luftmassenmessers 62 hinein erstreckt. Die Messgenauigkeit von Hitzdrahtanemometern hängt von der Art der Anströmung bzw. einem Geschwindigkeitsprofil des vorbeiströmenden Luftmassenstroms ab. Eine Veränderung der Anströmung bzw. des Geschwindigkeitsprofils führt zu abweichenden Messergebnissen. Durch die erfindungsgemäße Anbindung des Sekundärluftauslasses 44 an die Reinseite 38 mittels des ringförmigen Kanals 46 kann erreicht werden, dass die Durchströmung des Luftmassenmessers 62 von der Menge der durch den Sekundärluftauslass 46 abgezogenen Reinluft nicht merklich beeinflusst wird. Der erfindungsgemäße Luftfilter 10 gewährleistet daher eine besonders präzise Messung des Luftmassenstroms durch den Primärluftauslass 42.

## Patentansprüche

1. Luftfilter (10), aufweisend
- ein Filtergehäuse (12) mit einem Rohlufteinlass (34) und
- ein Filterelement (14), das in dem Filtergehäuse (12) angeordnet ist und das ein Filtermedium (16) aufweist, welches eine Längsachse (18) des Filterelements (14) ringförmig umgibt, wobei das Filtermedium (16) eine Rohseite (36) in dem Filtergehäuse (12) von einer Reinseite (38) innerhalb des Filterelements (14) trennt,
wobei das Filterelement (14) eine erste Endscheibe (20) mit einem Reinluftdurchlass (40) aufweist,
wobei an dem Filtergehäuse (12) ein Primärluftauslass (42) ausgebildet ist, der mit der Reinseite (38) des Filterelements (14) kommuniziert,
wobei an dem Filtergehäuse (12) ein Sekundärluftauslass (44) ausgebildet ist, der über einen Kanal (46) mit der Reinseite (38) des Filterelements (14) kommuniziert,
wobei der Kanal (46) den Primärluftauslass (42) ringförmig umgibt und in radialer Richtung durch eine umlaufende Innenwand (48) und eine umlaufende Außenwand (50) begrenzt ist,
und wobei die erste Endscheibe (20) und die Außenwand (50) des Kanals (46) dichtend miteinander verbunden sind,
wobei an der ersten Endscheibe (20) ein sich axial erstreckender Vorsprung (58) ausgebildet ist, der den Reinluftdurchlass (40) ringförmig umgibt und der dichtend mit der Außenwand (50) des Kanals (46) verbunden ist, und wobei sich der Vorsprung (58) und die Außenwand (50) in axialer Richtung überlappen, wobei an dem Vorsprung (58), insbesondere auf einer radial inneren Seite des Vorsprungs (58), ein radial wirkendes Dichtelement (60), vorliegt.

2. Luftfilter (10) nach Anspruch 1, **dadurch gekennzeichnet, dass** das Dichtelement (60) an den Vorsprung (58) angespritzt ist.

3. Luftfilter (10) nach Anspruch 1 oder 2, **dadurch gekennzeichnet, dass** der Vorsprung (58) radial außerhalb des Reinluftdurchlasses (40) des Filterelements (14) vorliegt und ein radialer Abstand des Vorsprungs (58) zu einer radial äußeren Umlaufkante der ersten Endscheibe (20) kleiner ist als ein radialer Abstand des Vorsprungs (58) zu einer radial inneren Umlaufkante des Reinluftdurchlasses (40).

4. Luftfilter (10) nach einem der vorhergehenden Ansprüche, **dadurch gekennzeichnet, dass** das Filtergehäuse (12) ein Adapterteil (28) aufweist, an welchem die Innenwand (48) des Kanals (46) ausgebildet ist und welches den Kanal (46) zumindest abschnittsweise in axialer Richtung begrenzt.

5. Luftfilter (10) nach Anspruch 4, **dadurch gekennzeichnet, dass** die Außenwand (50) des Kanals (46) an dem Adapterteil (28) ausgebildet ist, wobei die Außenwand (50) axial weiter hervor ragt als die Innenwand (48).

6. Luftfilter (10) nach Anspruch 4 oder 5, **dadurch gekennzeichnet, dass** das Adapterteil (28) mit einem weiteren Gehäuseteil (24) des Filtergehäuses (12) verbunden ist, insbesondere verrastet ist.

7. Luftfilter (10) nach einem der Ansprüche 4 bis 6, **dadurch gekennzeichnet, dass** das Adapterteil (28) einen den Sekundärluftauslass (44) bildenden Stutzen (45) aufweist.

8. Luftfilter (10) nach einem der vorhergehenden Ansprüche weiterhin aufweisend einen Luftmassenmesser (62), der mit dem Primärluftauslass (42) verbunden ist.

9. Luftfilter (10) nach einem der Ansprüche 4 bis 7 und nach Anspruch 8, **dadurch gekennzeichnet, dass** ein Gehäuseelement des Luftmassenmessers (62) einstückig mit dem Adapterteil (28) ausgebildet ist.

10. Luftfilter (10) nach einem der vorhergehenden Ansprüche, **dadurch gekennzeichnet, dass** die Innenwand (48) des Kanals (46) den Primärluftauslass (42) zu dem Kanal (46) hin begrenzt.

11. Luftfilter (10) nach Anspruch 8 oder 9 und nach Anspruch 10, **dadurch gekennzeichnet, dass** ein Gehäuseelement (64) des Luftmassenmessers (62) dichtend mit der Innenwand (48) des Kanals (46) verbunden ist.

12. Luftfilter (10) nach Anspruch 11, **dadurch gekennzeichnet, dass** an der Innenwand (48) des Kanals (46) ein weiteres Dichtelement (70) gehalten ist, vorzugsweise wobei das weitere Dichtelement (70) an die Innenwand (48) angespritzt ist.

13. Luftfilter (10) nach einem der vorhergehenden Ansprüche, **dadurch gekennzeichnet, dass** die Innenwand (48) des Kanals (46) in radialer Richtung innerhalb des Reinluftdurchlasses (40) der ersten Endscheibe (20) angeordnet ist.

14. Luftfilter (10) nach einem der vorhergehenden Ansprüche, **dadurch gekennzeichnet, dass** die Innenwand (48) des Kanals (46) in axialer Richtung von der ersten Endscheibe (20) beanstandet angeordnet ist.

15. Luftfilter (10) nach einem der vorhergehenden Ansprüche, **dadurch gekennzeichnet, dass** Filterelement (14) eine hohlzylindrische Form aufweist und ein insbesondere sternförmig gefaltetes Filtermedium (16) aufweist.

## Claims

1. An air filter (10), featuring
- a filter housing (12) having a raw air intake (34) and
- a filter element (14) disposed in the filter housing (12) and featuring a filter medium (16) surrounding a longitudinal axis (18) of the filter element (14) in a ring-shaped manner, wherein the filter medium (16) separates a raw side (36) in the filter housing (12) from a clean side (38) inside the filter element (14), wherein the filter element (14) features a first end disc (20) having a clean air passage (40),
wherein a primary air outlet (42) communicating with the clean side (38) of the filter element (14) is provided at the filter housing (12),
wherein a secondary air outlet (44) communicating via a channel (46) with the clean side (38) of the filter element (14) is provided at the filter housing (12), wherein the channel (46) surrounds the primary air outlet (42) in a ring-shaped manner and is limited in the radial direction by a circumferential interior wall (48) and a circumferential exterior wall (50),
and wherein the first end disc (20) and the exterior wall (50) of the channel (46) are sealingly connected to one another,
wherein a projection (58) extending in the axial direction is provided at the first end disc (20), said projection surrounding the clean air passage (40) in a ring-shaped manner and being connected sealingly to the exterior wall (50) of the channel (46), and wherein the projection (58) and the exterior wall (50) overlap in the axial direction, wherein a radially acting sealing element (60) is present at the projection (58), in particular at a radially interior side of the projection (58).

2. The air filter (10) according to claim 1, **characterized in that** the sealing element (60) is injection-molded to the projection (58).

3. The air filter (10) according to claim 1 or 2, **characterized in that** the projection (58) is present radially outside the clean air passage (40) of the filter element (14) and a radial distance of the projection (58) to a radially outer circumferential edge of the first end disc (20) is smaller than a radial distance of the projection (58) to a radially inner circumferential edge of the clean air passage (40).

4. The air filter (10) according to one of the preceding claims, **characterized in that** the filter housing (12) features an adapter part (28) on which the interior wall (48) of the channel (46) is provided and which delimits the channel (46) at least section-wise in the axial direction.

5. The air filter (10) according to claim 4, **characterized in that** the exterior wall (50) of the channel (46) is provided on the adapter part (28), wherein the exterior wall (50) projects axially further than the interior wall (48).

6. The air filter (10) according to claim 4 or 5, **characterized in that** the adapter part (28) is connected to a further housing component (24) of the filter housing (12), in particular is latched.

7. The air filter (10) according to claim 4 to 6, **characterized in that** the adapter part (28) features a pipe connection (45) forming the secondary air outlet (44).

8. The air filter (10) according to one of the preceding claims, further featuring a mass air flow meter (62) connected to the primary air outlet (42).

9. The air filter (10) according to one of the claims 4 to 7 and according to claim 8, **characterized in that** a housing element of the mass air flow meter (62) is designed in one piece with the adapter part (28).

10. The air filter (10) according to one of the preceding claims, **characterized in that** the interior wall (48) of the channel (46) delimits the primary air outlet (42) towards the channel (46).

11. The air filter (10) according to claim 8 or 9 and according to claim 10, **characterized in that** a housing element (64) of the mass air flow meter (62) is sealingly connected to the interior wall (48) of the channel (46).

12. The air filter (10) according to claim 11, **characterized in that** a further sealing element (70) is held at the interior wall (48) of the channel (46), preferably wherein the further sealing element (70) is injection-molded to the interior wall (48).

13. The air filter (10) according to one of the preceding claims, **characterized in that** the interior wall (48) of the channel (46) is disposed in the radial direction inside the clean air passage (40) of the first end disc (20).

14. The air filter (10) according to one of the preceding claims, **characterized in that** the interior wall (48) of the channel (46) is disposed spaced apart from the first end disc (20) in the axial direction.

15. The air filter (10) according to one of the preceding claims, **characterized in that** the filter element (14) features a hollow-cylindrical shape and in particular a star-shaped folded filter medium (16).

## Revendications

1. Filtre à air (10), présentant
- un boîtier de filtre (12) ayant une entrée d'air brut (34) et
- un élément de filtre (14) disposé dans le boîtier de filtre (12) et présentant un milieu filtrant (16) qui entoure de manière annulaire un axe longitudinal (18) de l'élément de filtre (14), dans lequel le milieu filtrant (16) sépare un côté brut (36) dans le boîtier de filtre (12) d'un côté pur (38) à l'intérieur de l'élément de filtre (14),
dans lequel l'élément de filtre (14) présente un premier disque d'extrémité (20) ayant un passage d'air pur (40),
dans lequel une sortie d'air primaire (42) est réalisée sur le boîtier de filtre (12) communiquant avec le côté pur (38) de l'élément de filtre (14),
dans lequel une sortie d'air secondaire (44) communiquant avec le côté pur (38) de l'élément de filtre (14) par l'intermédiaire d'un conduit (46) est réalisée sur le boîtier de filtre (12),
dans lequel le conduit (46) entoure la sortie d'air primaire (42) de manière annulaire et est limité en direction radiale par une paroi interne périphérique (48) et une paroi externe périphérique (50),
et dans lequel le premier disque d'extrémité (20) et la paroi externe (50) du conduit (46) sont reliés l'un à l'autre de manière étanche,
dans lequel une saillie (58) s'étendant axialement est conçue sur le premier disque d'extrémité (20), ladite saillie entourant de manière annulaire le passage d'air pur (40) et étant relié de manière étanche à la paroi externe (50) du conduit (46), et dans lequel la saillie (58) et la paroi externe (50) se chevauchent dans le sens axial, dans lequel un élément d'étanchéité (60) à action radiale se trouve sur la saillie (58), notamment sur un côté radialement intérieur de la saillie (58).

2. Filtre à air (10) selon la revendication 1, **caractérisé en ce que** l'élément d'étanchéité (60) est moulé par injection sur la saillie (58).

3. Filtre à air (10) selon la revendication 1 ou 2, **caractérisé en ce que** la saillie (58) se trouve radialement à l'extérieur du passage d'air pur (40) de l'élément de filtre (14) et une distance radiale de la saillie (58) à un bord périphérique radialement extérieur du premier disque d'extrémité (20) est inférieure à une distance radiale de la saillie (58) à un bord périphérique radialement intérieur du passage d'air pur (40).

4. Filtre à air (10) selon l'une quelconque des revendications précédentes, **caractérisé en ce que** le boîtier de filtre (12) présente une pièce d'adaptation (28) sur laquelle est conçue la paroi interne (48) du conduit (46) et qui délimite le conduit (46) au moins par sections dans le sens axial.

5. Filtre à air (10) selon la revendication 4, **caractérisé en ce que** la paroi externe (50) du conduit (46) est conçue en tant que pièce d'adaptation (28), la paroi externe (50) faisant saillie axialement plus que la paroi interne (48).

6. Filtre à air (10) selon la revendication 4 ou 5, **caractérisé en ce que** la pièce d'adaptation (28) est reliée à un autre composant de boîtier (24) du boîtier de filtre (12), notamment par encliquetage.

7. Filtre à air (10) selon l'une quelconque des revendications 4 à 6, **caractérisé en ce que** la pièce d'adaptation (28) présente une tubulure (45) formant la sortie d'air secondaire (44).

8. Filtre à air (10) selon l'une quelconque des revendications précédentes, présentant en outre un débitmètre d'air (62) relié à la sortie d'air primaire (42).

9. Filtre à air (10) selon l'une quelconque des revendications 4 à 7 et selon la revendication 8, **caractérisé en ce qu'**un élément de boîtier du débitmètre d'air (62) est réalisé d'un seul tenant avec la pièce d'adaptation (28).

10. Filtre à air (10) selon l'une quelconque des revendications précédentes, **caractérisé en ce que** la paroi interne (48) du conduit (46) délimite la sortie d'air primaire (42) vers le conduit (46).

11. Filtre à air (10) selon la revendication 8 ou 9 et selon la revendication 10, **caractérisé en ce qu'**un élément de boîtier (64) du débitmètre d'air (62) est raccordé de manière étanche à la paroi interne (48) du conduit (46).

12. Filtre à air (10) selon la revendication 11, **caractérisé en ce qu'**un autre élément d'étanchéité (70) est maintenu sur la paroi interne (48) du conduit (46), de préférence dans lequel l'autre élément d'étanchéité (70) est moulé par injection sur la paroi interne (48).

13. Filtre à air (10) selon l'une quelconque des revendications précédentes, **caractérisé en ce que** la paroi interne (48) du conduit (46) est disposée en sens radial à l'intérieur du passage d'air pur (40) du premier disque d'extrémité (20).

14. Filtre à air (10) selon l'une quelconque des revendications précédentes, **caractérisé en ce que** la paroi interne (48) du conduit (46) est disposée de manière espacée dans le sens axial par rapport au premier disque d'extrémité (20).

15. Filtre à air (10) selon l'une quelconque des revendications précédentes, **caractérisé en ce que** l'élément de filtre (14) présente une forme de cylindre creux et un milieu filtrant (16) notamment plié en étoile.
